# EUROPÄISCHE PATENTSCHRIFT

(11) **EP 1 464 595 B1**
(45) Veröffentlichungstag und Bekanntmachung des Hinweises auf die Patenterteilung: **02.05.2007**
(21) Anmeldenummer: 04090077.1
(22) Anmeldetag: 01.03.2004
(51) Int. Cl.: B65G 47/53

(54) **Fördersystem, insbesondere eine Flughafen-Gepäckförderanlage, für Behälter**
Conveying system for containers, in particular an air port luggage conveying system
Système de transport de conteneurs, en particulier un tapis de transport de valises pour aéroport

(30) Priorität: 04.04.2003 DE 10315403
(43) Veröffentlichungstag der Anmeldung: 06.10.2004
(73) Patentinhaber: SIEMENS AKTIENGESELLSCHAFT, 80333 München (DE)
(72) Erfinder: Brixius, Wolfgang, 91077 Neunkirchen A. Br (DE); Gräfer, Dominik, 44265 Dortmund-Wellinghofen (DE); Hoene, Albrecht, Dr., 93138 Lappersdorf (DE)

(56) Entgegenhaltungen:
- EP-A- 1 182 152

## Beschreibung

Die Erfindung betrifft ein Fördersystem für Behälter, insbesondere eine Flughafen-Gepäckförderanlage, gemäß dem Oberbegriff des Anspruchs 1.

Fördersysteme mit zusammengeschalteten Einzelförderern sind bekannt, wobei es häufig erforderlich ist, unmittelbar hintereinander folgende Förderer unter einem vorgegebenen Winkel zueinander anzuordnen. Bei einem Winkel von 90° spricht man dabei auch von einem Eckumsetzer. Ein solcher Eckumsetzer ist beispielsweise in der DE 197 25 480 C1 beschrieben. Der Eckumsetzer setzt die Behälter, die sich in Ausförderrichtung des einen Förderers bewegen in die Einförderrichtung des anderen Förderers um. Dabei sind die beiden Förderer in zueinander beabstandeten horizontalen Ebenen angeordnet; zum Ausgleich des vertikalen Abstands wird in der DE 197 25 480 C1 ein Hebetisch verwendet.

Derartige Hebetische können bei Förderern mit Rollenbahnen oder Förderbändern eingesetzt werden.

Um die drei Funktionen: Einfördern, Heben und Ausfördern zu realisieren, werden meist drei Antriebe verwendet. Der erste Antrieb befördert den Behälter in eine Position, aus der er rechtwinklig zur Einförderrichtung abtransportiert werden soll. Der Behälter hält dazu an dieser Position an und wird dann mit Hilfe des Hubwerks unter Einsatz des zweiten Antriebs angehoben, wobei er vom Einförderband abgehoben wird. In dieser Position wird der dritte Antrieb eingeschaltet, welcher das Ausförderband antreibt, das den Behälter in Ausförderrichtung abtransportiert.

Bei einem anderen bekannten Umsetzer sind zwei parallel geführte Laufbänder in einem Winkel von 90° zur Hauptförderrichtung angeordnet, wobei die Laufbänder jeweils einen mit dem Band verbundenen Keil tragen. Beim Ausschleusen des Behälters aus der Hauptförderrichtung fährt der Behälter in eine Position, in der die beiden Keile unter die in Ausschleusrichtung hintere Behälterkante geführt werden, so dass der Behälter in Ausschleusrichtung bewegt wird. Das Einschleusen in die Hauptförderrichtung erfolgt ebenfalls mittels der beiden Keile, die den Behälter an der vorderen Kante erfassen und gegen einen Anschlag ziehen, welcher den Behälter solange in seiner Position hält, bis die Keile über die Umlenkrollen unter den Behälter abtauchen.

Aus der europäischen Patentanmeldung EP-A-1 182 152 ist ein gattungsgemäßes Fördersystem für Behälter bekannt geworden, in das ein Umsetzer zum Umsetzen der auf Rollenfördern geförderten Behälter integriert ist. Der Umsetzer beinhaltet einen mit Transportketten gebildeten Querförderer über den das Fördergut aus einer Förderrichtung in eine quer dazu gerichtete zweite Förderrichtung umgesetzt werden kann. Die Ketten weisen rollenförmige Verdickungen auf, die beim endlosen Umlauf der Kette das Fördergut anheben und in die Förderebene des weiterführenden Förderers verbringen.

Die Aufgabe der Erfindung ist es, ein antriebstechnisch einfaches Fördersystem mit einem Umsetzer, insbesondere einen Eckumsetzer, anzugeben, der die Behälter im Wesentlichen waagerecht umsetzt und stützt.

Die Lösung dieser Aufgabe ist durch die im Anspruch 1 angegebenen Merkmale gegeben. Durch die kennzeichnenden Merkmale der Unteransprüche ist das Fördersystem in vorteilhafter Weise weiter ausgestaltet.

Die erfindungsgemäße Lösung sieht einen Umsetzer vor, der einen Förderer aufweist, der in Einförderrichtung eines dem Umsetzer nachgeschalteten Förderers fördert. Dieser Förderer des Umsetzers kann ein Rollenförderer sein; vorzugsweise handelt es sich um einen Bandförderer mit einem Paar voneinander beabstandeter Förderbänder. Die Förderebene dieser Förderbänder ist geringfügig tiefer angeordnet als die Förderebene des dem Umsetzer vorgeschalteten Förderers. Der Umsetzer verfügt außerdem über mindestens ein Förderband, vorzugsweise ein Paar parallel im Abstand nebeneinander angeordneter Förderbänder, deren Obertrum jeweils in Ausförderrichtung des dem Umsetzer vorgeschalteten Förderers verläuft. Dieses Förderband ist jeweils auf einem Teil seiner Länge mit mindestens einer Verdickung versehen, die den kleinen Höhenunterschied zwischen den Förderebenen des dem Umsetzer vorgeschalteten Förderers und des Förderers des Umsetzers ausgleicht, wobei die nicht mit Verdickungen versehenen Teile des Förderbandes in dessen Obertrum geringfügig unterhalb der Förderebene des Förderers des Umsetzers liegen. Die Verdickung ist in der Weise angeordneten, dass ein Behälter auf der Verdickung aufliegend in Ausförderrichtung des vorgeschalteten Förderers auf den Umsetzer bewegbar ist. Weiterhin verfügt der Umsetzer noch über mindestens ein zusätzliches bewegbares Stützelement, das den Behälter beim Verlassen des vorgeschalteten Förderers oberhalb der Förderebene des Förderers des Umsetzers hält. Der Behälter ist nun dadurch auf die Förderebene des Förderers ansenkbar und somit auf diesen aufsetzbar, dass die Verdickung über die Umlenkung des mindestens einen umlaufenden Förderbandes des Umsetzers aus der Förderebene des vorgeschalteten Förderers heraus nach unten in den Bereich des Untertrums geführt wird; gleichzeitig wird auch das mindestens eine Stützelement abgesenkt. Durch Umkehr der Drehrichtung der Antriebe der Förderer und Förderbänder lassen sich die Vorgänge umkehren, so dass Behälter auch in entgegengesetzter Richtung von dem "nachgeschalteten" auf den "vorgeschalteten" Förderer umgesetzt werden können.

Die Verdickungen bewegen sich zum Absenken mit dem Obertrum des Förderbands über die Förderbandumlenkungen hinweg nach unten in den Untertrum und aus dem Untertrum wieder in den Obertrum nach oben. Auf diese Weise kann gleichzeitig mit dem Behältertransport ein Anheben bzw. Absenken des Behälters erfolgen. Dadurch kann ein Antriebsmotor und die dazugehörige Mechanik eingespart werden, welche sonst für ein waagerechtes Eckumsetzen erforderlich ist. Die Integration des Hebe- und Absenkvorgangs in den Quertransport eliminiert die Zykluszeiten für diese Vorgänge, was zu einer Durchsatzverbesserung führt. Weiter entfällt der für die Hubeinheit benötigte Bauraum, wodurch die Einheit flacher gestaltet werden kann. Im Vergleich zu Hubeinheiten mit Kulissenführung entsteht bei dieser Anordnung keine Hubquerbewegung in oder entgegengesetzt zur Ein- oder Ausfahrrichtung, welche zusätzliche Zeit erfordert und eine genaue Positionierung des Förderguts erschwert.

Der Antrieb vereinfacht sich weiter, wenn das Stützelement ebenso wie das Förderband des Umsetzers als endlos umlaufendes, mit mindestens einer den Abstand der Förderebenen des Förderers und des mindestens einen Förderbandes des Umsetzers ausgleichenden Verdickung auf einem Teil seiner Länge versehenes Hilfsförderband ausgebildet ist, das neben dem Förderband des Umsetzers angeordnet und synchron mit diesem angetrieben ist, wobei die Längen der Verdickungen und die Längen der Förderbänder jeweils so gewählt sind, dass ein synchrones Absenken des Behälters beim Abtauchen der Verdickungen erfolgt.

Bei einer konstruktiv einfachen Lösung sind die beiden nebeneinander liegenden Förderbänder von einem gemeinsamen Motor angetrieben.

Zur Erzielung einer synchronisierten Bewegung der Förderbänder wird vorgeschlagen, dass das Förderband und das Hilfsförderband jeweils um eine gemeinsame obere Umlenkrolle geführt sind, wobei die Verdickungen über die Umlenkungen je nach Drehrichtung nach oben bzw. unten geführt werden.

Die Erfindung wird nachfolgend anhand eines in der Zeichnung schematisch dargestellten Ausführungsbeispiels näher beschrieben. Es zeigen:
- Fig. 1: einen Eckumsetzer für ein Fördersystem,
- Fig. 2: einen Teilausschnitt des Eckumsetzers nach Fig. 1 und
- Fig. 3a-3d: die Wirkungsweise des Eckumsetzers anhand eines umzusetzenden Behälters,
- Fig. 4: eine Draufsicht auf den Eckumsetzer mit vor- und nachgeschaltetem Förderer in einer schematischen Darstellung.

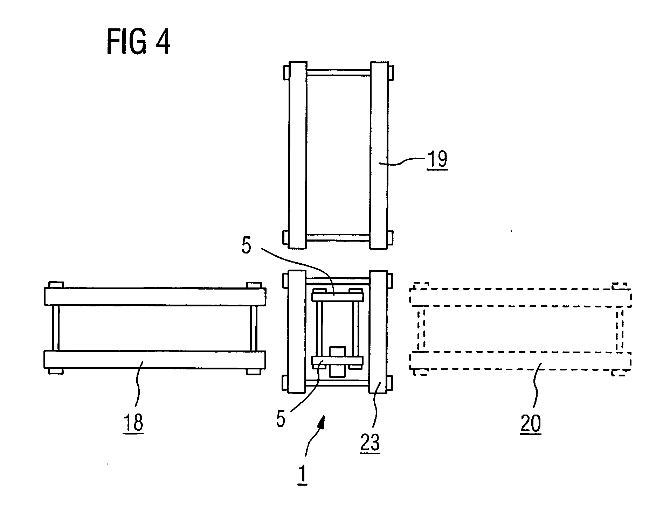

In Fig. 4 ist ein Eckumsetzer 1 innerhalb eines ausschnittsweise angedeuteten Fördersystems dargestellt, das einen Förderer 18 und einen in rechtem Winkel dazu angeordneten Förderer 19 beinhaltet. Beide Förderer 18, 19 sind mit jeweils einem Paar Förderbänder ausgestattet. Es können aber beliebige Förderer (z.B. Rollenförderer) mit dem Eckumsetzer 1 verbunden werden. Je nach Betriebsweise und Ausbildung des Eckumsetzers 1 können Fördergüter, insbesondere Behälter, vom Förderer 19 auf den Eckumsetzer 1 und von diesem rechtwinklig weiter über den Förderer 19 transportiert werden. Auch der umgekehrte Transportweg vom Förderer 19 zum Förderer 18 ist möglich. Ein gestrichelt angedeuteter weiterer Förderer 20 zeigt, dass beispielsweise auch ein wahlweises Umsetzen von Fördergütern, die vom Förderer 19 angeliefert werden, auf die beiden Förderer 18 und 20, die dann als Abförderer betrieben werden, möglich ist.

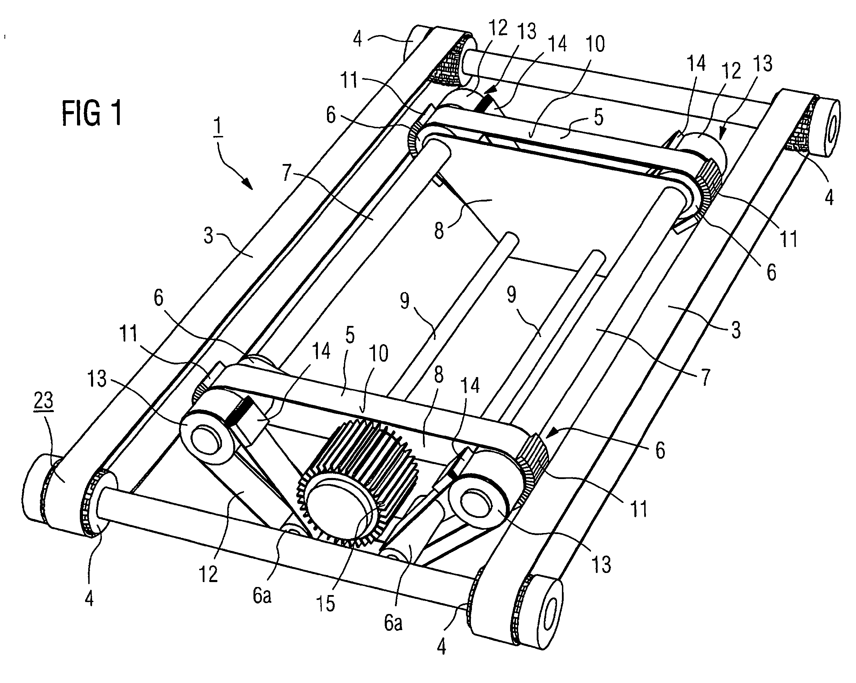

Fig. 1 zeigt den Umsetzer 1 des Fördersystems für Behälter, der insbesondere in einer Flughafen-Gepäckförderanlage einsetzbar ist. Der Umsetzer 1 weist einen Querförderer 23 mit zwei außenliegenden, synchron angetriebenen Förderbändern 3 auf, die zur Umlenkung um Umlenkrollen 4 geführt sind.

Zwischen den endlos umlaufenden Förderbändern 3 sind quer zu deren Förderrichtung zwei weitere ebenfalls endlos umlaufende, synchron angetriebene Förderbänder 5 parallel im Abstand zueinander verlaufend vorgesehen. Die beiden Bänder 5 des innenliegenden Förderbandpaares laufen über obere Umlenkrollen 6 und untere Umlenkrollen 6a, von denen die oberen drehfest auf den Enden von zwei parallelen Wellen 7 sitzen. Die drehgelagerten Wellen 7 bilden zusammen mit zwei stirnseitigen Blechen 8 und zwei stangenförmigen Trägern 9 einen stabilen Tragrahmen. Die Auflageflächen 10 der Bänder 5 in Fig. 1 liegen in einer gemeinsamen horizontalen Ebene. Diese liegt geringfügig unterhalb der Förderebene, die von den beiden Auflageflächen der Bänder 3 des Förderers 23 gebildet wird.

Wie Fig. 1 erkennen lässt, weisen die Förderbänder 5 Verdickungen 11 z.B. in Form von elastischen rechteckigen Streifen auf, die beispielsweise auf die beiden Förderbänder 5 in vorbestimmten Abstand voneinander aufgeklebt oder anderweitig angebracht oder angeformt sind.

Wie Fig. 1 ebenfalls zeigt, ist der Umsetzer 1 noch mit vier weiteren kürzeren Hilfsförderbändern 12 versehen, zwei auf jeder Seite, die jeweils über eine der beiden unteren Umlenkrollen 6a geführt sind. Die andere zur Umlenkung der Förderbänder 12 zugehörige Umlenkrolle 13 sitzt drehfest am Ende der zugehörigen Welle 7. Auch die Hilfsförderbänder 12 sind mit Verdickungen 14 in Form von rechteckigen elastischen Streifen versehen, welche wie bei den Förderbändern 5 aufgeklebt oder anderweitig angebracht sind. Die Dicke der Verdickungen 11, 14 ist so gewählt, dass ihre Oberseite, sobald sie in den Obertrum des Förderbandes 5 bzw. in den Bereich der Oberseite der Umlenkrolle 13 gelangen, den Höhenunterschied zur Förderebene des vorgeschalteten Förderers 18 (Fig. 4) ausgleichen, d.h. dass die Verdickungen in der entsprechenden Stellung der Förderbänder 5, 12 mit ihrer Oberseite im wesentlichen in der Förderebene des Förderers 18 liegen. Die Förderebene, die durch die Förderbänder 3 des Förderers 23 gebildet wird, liegt etwas tiefer als die Förderebene des Förderers 18, aber gleichzeitig etwas höher als die durch die Auflageflächen 10 der Förderbänder 10 gebildete Ebene.

Für den Antrieb der innenliegenden Förderbänder 5, 12 ist nur ein einziger Antriebsmotor 15 erforderlich.

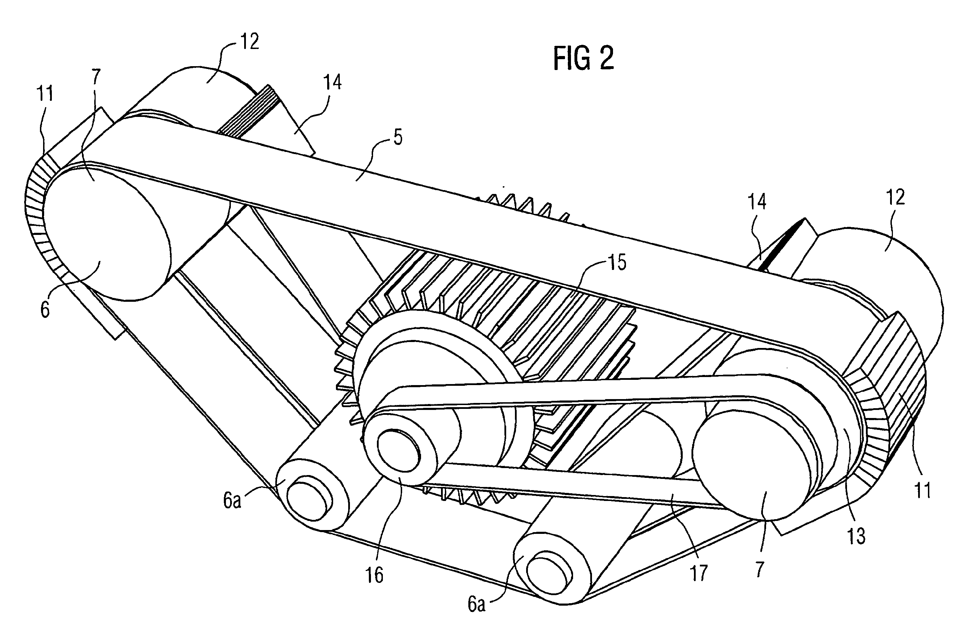

In Fig. 2 ist der Antrieb der innenliegenden Förderbänder 5, 12 ausschnittsweise vergrößert gezeigt. Neben den Umlenkrollen 6, 6a, 13 sind die umlaufenden Bänder 5, 12 mit den Verdickungen 11, 14 zu sehen. Der Antriebsmotor 15 weist ein zylindrisches Antriebsrad 16 auf, das über einen Riemen 17 eine der Wellen 7 antreibt, über welche der Riemen 17 geführt ist.

Wie Fig. 2 erkennen lässt, sind die Längen der endlos umlaufenden Bänder 12 jeweils gleich lang. Dagegen ist das Förderband 5 doppelt so lang wie die Bänder 12. Die Längen der Verdickungen 11, 14 und insbesondere ihre Position und Abstände untereinander sind so gewählt, dass sie der Behälterbreite und den Abmessungen der Förderer (d.h. der erforderlichen Länge des Quertransports) entsprechen und ein synchrones Absenken des Behälters 2 beim Abtauchen der Verdickungen nach unten gewährleistet ist, wie dies nachfolgend erläutert wird.

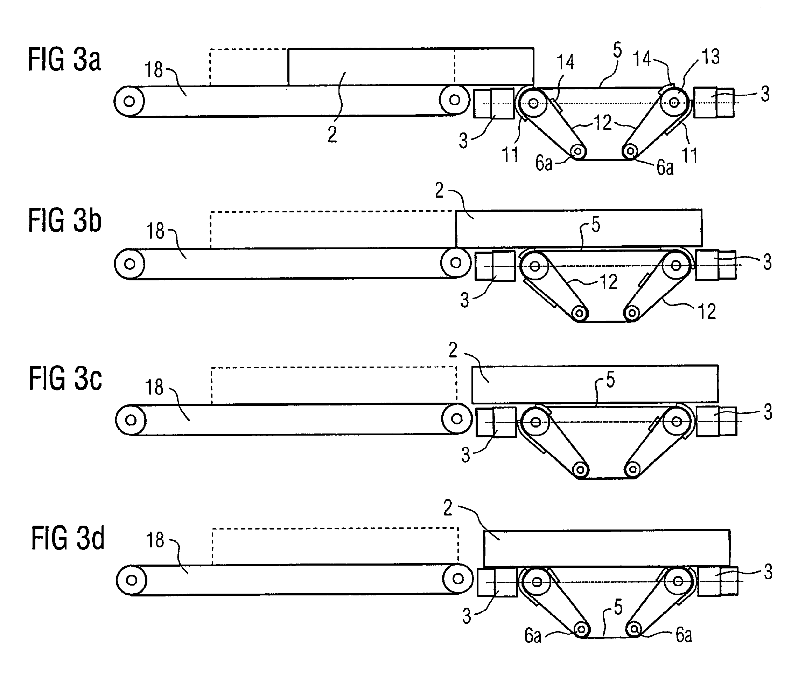

In Fig. 3a-3d ist beispielhaft der Einfördervorgang eines Behälters 2 von einem zufördernden Bandförderer 18 auf die abfördernden Bänder 3 des Förderers 23 in vier Schritten dargestellt.

Fig. 3a zeigt den Umsetzer 1 mit seinen Bändern 5, 12 in einer ersten Grundstellung.

Wird ein Behälter 2 durch den Förderer 18 in Richtung des Umsetzers 1 bewegt, wird die Vorderkante der Verdickung 11 des Förderbandes 5 näherungsweise mit der Vorderkante des Behälters 2 synchronisiert. Im weiteren Verlauf bewegt sich die vorzugsweise elastische Verdickung 11 durch das Bewegen des Förderbands 5 mit gleicher Geschwindigkeit wie die des Behälters 2 vollständig unter den Behälter 2 und trägt ihn im vorderen Behälterbereich. Wenn sich der Behälter 2 mit seiner Hinterkante am Ende des Förderers 17 befindet (Fig. 3b), befindet sich die Verdickung 14 des ebenfalls mit gleicher Geschwindigkeit angetriebenen Hilfsförderbandes 12 - wie in Fig. 3b dargestellt - in der Übernahmeposition und übernimmt dort den hinteren Teil des Behälters 2 als zusätzliches Stützelement, um den Behälter 2 in seiner horizontalen Lage oberhalb der Förderebene der Förderbänder 3 zu halten. Durch weitere Drehung der Umlenkrollen 13 werden - Fig. 3c - die Verdickungen 11, 14 um die Umlenkrollen 13 praktisch gleichzeitig nach unten geführt und setzen so den Behälter 2 parallel auf den Förderbändern 3 ab. Dies ist in Fig. 3d dargestellt, wo der Behälter 2 auf den Bändern 3 aufliegt. Der Umsetzer 1 befindet sich jetzt mit seinen Bändern 5, 12 in der zweiten Grundstellung, in der die Auflageflächen 10 einen geringfügigen Abstand zur Unterseite des Behälters 2 haben. Der Behälter 2 kann daher problemlos durch die Förderbänder 3 zu dem Förderer 19 (Fig. 4) weitergefördert werden.

Bedingt durch die symmetrische Anordnung der Verdickungen 11, 14 und die Teilung der Bänder 5, 12 im Verhältnis 1:2 kann der Umsetzer 1 in jeder Ein- und Ausförderrichtung betrieben werden. Der Behälter 2 kann so auch umgekehrt aus der zweiten Grundstellung vom Band 3 auf das Band 5 umgesetzt werden, um ihn an den Förderer 18 oder 20 (Fig. 4) zu übergeben.

Es versteht sich, dass die erfindungsgemäße Lösung, die während eines Quertransports im Umsetzer vorzunehmende Hub- und Senkbewegung mittels gezielt auf Förderbändern angebrachter Verdickungen auch in anderer Weise ausgeführt werden kann, als dies in dem dargestellten Ausführungsbeispiel der Fall ist. Beispielsweise könnte der Quertransportweg, der durch das Förderband 5 bewerkstelligt wird, auch durch zwei oder mehr hintereinander geschaltete Förderbänder mit Verdickungen realisiert werden, von denen eines die Funktion des zusätzlichen Stützelements übernimmt.

## Patentansprüche

1. Fördersystem für Behälter (2) mit zumindest zwei unter einem Winkel zueinander angeordneten Förderern (18, 19) zwischen denen ein Umsetzer (1) zum Umsetzen der Behälter von dem einen Förderer (18) auf den anderen Förderer (19) angeordnet ist, wobei der Umsetzer (1) einen dem Förderer (19) zufördernden, als Endlosförderer mit einem Paar voneinander beabstandeten Fördermitteln (3) ausgebildeten Querförderer (23) und zumindest ein zwischen den voneinander beabstandeten Fördermitteln (3) angeordnetes endlos umlaufendes Fördermittel (5) aufweist, dessen Obertrum in Ausförderrichtung des einen Förderers (18) verläuft, wobei die Förderebene des einen Förderers (18) höher angeordnet ist als die Förderebene des Querförderers(23) des Umsetzers (1) und wobei das Fördermittel (5) des Umsetzers (1) auf einem Teil seiner Länge mit zumindest einer den Abstand der Förderebenen des einen Förderers (18) und des Querförderers (23) ausgleichenden Verdickung (11) versehen ist, auf der der Behälter (2) von dem einen Förderers (18) auf den Umsetzer (1) bewegbar ist und wobei mindestens ein zusätzliches bewegbares Stützelement (14) vorgesehen ist, dass den Behälter (2) beim Verlassen des einen Förderers (18) oberhalb der Förderebene des Querförderers (23) hält, und dass der Behälter (2) dadurch auf die Höhe der Förderebene des Querförderers(23) absenkbar ist, dass die Verdickung (11) über die Umlenkung des Fördermittels (5) nach unten führbar und synchron dazu auch das Stützelement (14) absenkbar ist.
**dadurch gekennzeichnet,**
**dass** das Stützelement ebenso wie das Fördermittel (5) als endlos umlaufendes und mit mindestens einer den Abstand der Förderebenen des Querförderers(23) und des mindestens einen Förderbandes (5) ausgleichenden Verdickung (14) auf einem Teil seiner Länge versehenes Hilfsförderband (12) ausgebildet ist, das neben dem Förderband (5) angeordnet und synchron mit diesem angetrieben ist, wobei die Längen der Verdickungen (11, 14) und die Längen der Förderbänder (5, 12) jeweils so gewählt sind, dass ein synchrones Absenken des Behälters (2) erfolgt.

2. Fördersystem nach Anspruch 1,
**dadurch gekennzeichnet,**
**dass** der Querförderer(23) und das mindestens eine Förderband (5) quer, insbesondere rechtwinklig zueinander angeordnet sind.

3. Fördersystem nach Anspruch 1,
**dadurch gekennzeichnet,**
**dass** die beiden nebeneinander liegenden Förderbänder (5, 12) von einem gemeinsamen Motor (15) angetrieben sind.

4. Fördersystem nach Anspruch 3,
**dadurch gekennzeichnet,**
**dass** die beiden Förderbänder (5, 12) um eine gemeinsame obere Umlenkrolle (6) geführt sind.

5. Fördersystem nach Anspruch 1,
**dadurch gekennzeichnet,**
**dass** die voneinander beabstandeten Fördermittel (3) des Querförderers(23) als Förderbänder ausgebildet sind.

6. Fördersystem nach einem der Ansprüche 1 bis 5,
**dadurch gekennzeichnet,**
**dass** der Umsetzer (1) mindestens ein Paar voneinander beabstandeter, in Ausförderrichtung fördernde Förderbänder (5) aufweist.

7. Fördersystem nach den Ansprüchen 5 und 6,
**dadurch gekennzeichnet,**
**dass** das Förderbandpaar (5, 5) zwischen den Förderbändern (3, 3) des Querförderers (23) angeordnet ist.

8. Fördersystem nach Anspruch 1,
**dadurch gekennzeichnet,**
**dass** jedem Förderband (5) des Umsetzers (1) jeweils zwei Hilfsförderbänder (12) in symmetrischer Anordnung zugeordnet sind.

9. Fördersystem nach einem der Ansprüche 1 bis 8,
**dadurch gekennzeichnet,**
**dass** die Länge der Förderbänder (5) doppelt so groß ist wie die Länge der Hilfsförderbänder (12).

## Claims

1. Conveyor system for containers (2), having at least two conveyors (18, 19) which are arranged at an angle to one another and between which a transfer unit (1) is arranged for transferring the containers from the one conveyor (18) onto the other conveyor (19), with the transfer unit (1) having a transverse conveyor (23), which is constructed as an endless conveyor having a pair of mutually spaced conveying means (3) and which is to be conveyed in to the conveyor (19), and at least one endlessly revolving conveying means (5) which is arranged between the mutually spaced conveying means (3) and whereof the upper run runs in the outward direction of conveying of the one conveyor (18), with the plane of conveying of the one conveyor (18) being arranged higher up than the plane of conveying of the transverse conveyor (23) of the transfer unit (1), and with the conveying means (5) of the transfer unit (1) being provided, over part of its length, with at least one thickened portion (11) which compensates for the spacing between the planes of conveying of the one conveyor (18) and the transverse conveyor (23) and on which the container (2) is movable from the one conveyor (18) onto the transfer unit (1), and with at least one additional movable support element (14) being provided, that keeps the container (2) above the plane of conveying of the transverse conveyor (23) when it leaves the one conveyor (18), and that the container (2) is lowerable to the height of the plane of conveying of the transverse conveyor (23) in that the thickened portion (11) may be guided down over the deflection point of the conveying means (5) and, in synchronism therewith, the support element (14) is also lowerable,
**characterized in that** the support element, like the conveying means (5), takes the form of an endlessly revolving auxiliary conveyor belt (12) which is provided over part of its length with at least one thickened portion (14) which compensates for the spacing between the respective planes of conveying of the transverse conveyor (23) and the at least one conveyor belt (5), this auxiliary conveyor belt (12) being arranged next to the conveyor belt (5) and driven in synchronism therewith, with the lengths of the thickened portions (11, 14) and the lengths of the conveyor belts (5, 12) each being selected such that synchronous lowering of the container (2) is performed.

2. Conveyor system according to Claim 1,
**characterized in that** the transverse conveyor (23) and the at least one conveyor belt (5) are arranged transversely, in particular at a right angle to one another.

3. Conveyor system according to Claim 1,
**characterized in that** the two mutually adjacent conveyor belts (5, 12) are driven by a common motor (15).

4. Conveyor system according to Claim 3,
**characterized in that** the two conveyor belts (5, 12) are guided around a common upper deflection roller (6).

5. Conveyor system according to Claim 1,
**characterized in that** the mutually spaced conveying means (3) of the transverse conveyor (23) take the form of conveyor belts.

6. Conveyor system according to one of Claims 1 to 5,
**characterized in that** the transfer unit (1) has at least one pair of mutually spaced conveyor belts (5) which convey in the outward direction of conveying.

7. Conveyor system according to Claims 5 and 6,
**characterized in that** the pair of conveyor belts (5, 5) is arranged between the conveyor belts (3, 3) of the transverse conveyor (23).

8. Conveyor system according to Claim 1,
**characterized in that** in each case two auxiliary conveyor belts (12) are associated with each conveyor belt (5) of the transfer unit (1) in a symmetrical arrangement.

9. Conveyor system according to one of Claims 1 to 8,
**characterized in that** the length of the conveyor belts (5) is twice that of the auxiliary conveyor belts (12).

## Revendications

1. Système de convoyage destiné à des conteneurs (2) et comportant au moins deux convoyeurs (18, 19) disposés en angle l'un par rapport à l'autre et entre lesquels se trouve un transbordeur (1) pour transborder les conteneurs depuis l'un des convoyeurs (18) sur l'autre convoyeur (19),
dans lequel le transbordeur (1) comporte un convoyeur transversal (23) qui achemine au convoyeur (19) et qui est un convoyeur sans fin équipé d'une paire de moyens de convoyage (3) à distance l'un de l'autre et au moins un moyen de convoyage (5) qui tourne sans fin et qui se trouve entre les moyens de convoyage (3) à distance l'un de l'autre et dont le brin supérieur s'étend en direction d'acheminement de l'un des convoyeurs (18),
dans lequel le plan de convoyage de l'un des convoyeurs (18) est plus élevé que le plan de convoyage du convoyeur transversal (23) du transbordeur (1),
et dans lequel sur une partie de sa longueur, le moyen de convoyage (5) du transbordeur (1) est équipé d'au moins un épaississement (11) qui compense l'écart des plans de convoyage du convoyeur (18) et du convoyeur transversal (23) et sur lequel le conteneur (2) peut se déplacer du convoyeur (18) sur le transbordeur (1),
et dans lequel il y a au moins un élément d'appui (14) supplémentaire mobile qui maintient au-dessus du plan de convoyage du convoyeur transversal (23) le conteneur (2) quand il quitte le convoyeur (18),
et en ce que le conteneur (2) peut être baissé à la hauteur du plan de convoyage du convoyeur transversal (2) et
et en ce que l'épaississement (11) peut être déplacé vers le bas en déviant le moyen de convoyage (5) et l'élément d'appui (14) peut être abaissé aussi en synchronisme,
**caractérisé en ce que** l'élément d'appui tout comme le moyen de convoyage (5) est une bande auxiliaire de convoyage (12) qui tourne sans fin, qui comporte sur une partie de sa longueur au moins un épaississement (14) destiné à compenser l'écart des plans de convoyage du convoyeur transversal (23) et de l'au moins une bande convoyeuse (5) et qui est placée à côté de la bande convoyeuse (5) et est entraînée en même temps qu'elle, la longueur des épaississements (11, 14) et la longueur des bandes convoyeuses (5, 12) étant respectivement choisies pour que le conteneur (2) soit abaissé en synchronisme.

2. Système de convoyage selon la revendication 1, **caractérisé en ce que** le convoyeur transversal (23) et l'au moins une bande convoyeuse (5) sont transversaux l'un par rapport à l'autre, en particulier orthogonaux.

3. Système de convoyage selon la revendication 1, **caractérisé en ce que** les deux bandes convoyeuses (5, 12) placées l'une à côté de l'autre sont entraînées par un moteur (15) commun.

4. Système de convoyage selon la revendication 3, **caractérisé en ce que** les deux bandes convoyeuses (5, 12) sont guidées autour d'un rouleau de renvoi (6) supérieur commun.

5. Système de convoyage selon la revendication 1, **caractérisé en ce que** les moyens de convoyage (3) - du convoyeur transversal (23) - à distance l'un de l'autre prennent la forme de bandes convoyeuses.

6. Système de convoyage selon l'une des revendications 1 à 5, **caractérisé en ce que** le transbordeur (1) comporte au moins une paire de bandes convoyeuses (5) à distance l'une de l'autre et qui convoient en direction d'acheminement.

7. Système de convoyage selon les revendications 5 et 6, **caractérisé en ce que** la paire de bandes convoyeuses (5, 5) est placée entre les bandes convoyeuses (3, 3) du convoyeur transversal (23).

8. Système de convoyage selon la revendication 1, **caractérisé en ce que** deux bandes auxiliaires de convoyage (12) disposées symétriquement sont respectivement associées à chaque bande convoyeuse (5) du transbordeur (1).

9. Système de convoyage selon l'une des revendications 1 à 8, **caractérisé en ce que** les bandes convoyeuses (5) sont deux fois plus longues que les bandes convoyeuses auxiliaires (12).
